**Europäisches Patentamt**

**European Patent Office**

**Office européen des brevets**

(19)

(11) Veröffentlichungsnummer: **0 160 808**
**B1**

(12) # EUROPÄISCHE PATENTSCHRIFT

(45) Veröffentlichungstag der Patentschrift:
**27.04.88**

(21) Anmeldenummer: **85102719.3**

(22) Anmeldetag: **09.03.85**

(51) Int. Cl.⁴: **F 25 B 9/00,** F 15 B 15/22

(54) **Kältemaschine.**

(30) Priorität: **11.04.84 DE 8411307 U**

(43) Veröffentlichungstag der Anmeldung:
**13.11.85 Patentblatt 85/46**

(45) Bekanntmachung des Hinweises auf die Patenterteilung:
**27.04.88 Patentblatt 88/17**

(84) Benannte Vertragsstaaten:
**DE FR GB**

(56) Entgegenhaltungen:
**BE-A-440 699**
**DE-A-2 051 203**
**DE-A-3 313 506**
**DE-B-1 272 657**
**DE-B-2 516 591**
**DE-C-463 160**
**DE-C-805 335**
**FR-A-1 126 500**
**FR-A-2 065 790**
**US-A-1 789 570**
**US-A-2 556 698**
**US-A-2 678 072**
**US-A-2 906 101**
**US-A-2 942 868**
**US-A-3 143 933**
**US-A-3 491 653**
**US-A-3 782 859**
**US-A-3 802 211**

(73) Patentinhaber: **LEYBOLD AKTIENGESELLSCHAFT,**
**Bonner Str. 504, D-5000 Köln 51 (DE)**

(72) Erfinder: **Bächler, Werner, Hausacker 34, D-5064**
**Rösrath 1 (DE)**
Erfinder: **Heisig, Rolf, Dr., Theodor- Storm-**
**Strasse 8, D-5354 Weilerswist (DE)**
Erfinder: **Klein, Hans- Hermann, Dr., Auf den**
**Knippen 4, D-5064 Rösrath 3 (DE)**
Erfinder: **Völker, Karl- Heinz, Landstrasse 58,**
**D-5177 Titz (DE)**

(74) Vertreter: **Leineweber, Jürgen,**
**Nagelschmiedshütte 8, D-5000 Köln 40 (DE)**

(56) Entgegenhaltungen: (Fortsetzung)
**US-A-3 928 974**
**US-A-4 365 982**

## Beschreibung

Die Erfindung bezieht sich auf eine Kältemaschine mit mindestens einer Zylinder-Verdränger-Anordnung und einer von einer Feder bewirkten Dämpfung des Verdrängerelementes auf seiner kalten Seite. Eine derartige Kältemaschine ist aus der US-A-3 782 859 bekannt.

Kältemaschinen, insbesondere Tieftemperatur-Kältemaschinen der betroffenen Art, weisen einen zylindrischen Arbeitsraum mit einem Verdränger auf (vgl. z. B. die US-A-2 908 101). Der Arbeitsraum wird in bestimmter Weise alternierend mit einer Hochdruck- und einer Niederdruckgasquelle verbunden, so daß während der erzwungenen Hin- und Herbewegung des Verdrängers ein thermodynamischer Kreisprozeß (Stirling-Prozeß, Gifford-McMahon-Prozeß usw.) abläuft, wobei das Arbeitsgas in einem geschlossenen Kreislauf geführt wird. Die Folge ist, daß dem einen Endbereich der zylindrischen Arbeitskammer Wärme entzogen wird. Mit zweistufigen Refrigeratoren dieser Art und Helium als Arbeitsgas lassen sich z. B. Temperaturen bis unter 10 K erzeugen.

Dem bekannten Verdränger ist eine Dämpfung zugeordnet, wodurch wo stoßartige, rhythmische Erschütterungen, die sich auf mit der Kältemaschine verbundene Geräte übertragen, vermieden werden. Sind diese stoßempfindlich, dann könnten sonst Kältemaschinen der betroffenen Art nicht eingesetzt werden, und darüber hinaus würden ungedämpfte Verdränger Geräusche verursachen, die auf Dauer störend und belastend sind.

Aus der DE-B-2 516 591 ist eine Kältemaschine bekannt, bei der ein Verdränger beidseitig in Federn aufgehängt ist. Die Federn und der Verdränger bilden ein Masse-Federsystem, wodurch eine bestimmte Bewegung des Verdrängers erzeugt werden soll. Die verwendeten Spiral- (besser Wendel-) Federn haben den Nachteil, daß der Totraum (kleinster, noch auf einer Seite vorhandener Zylinderraum in den beiden Endlagen des Verdrängers) sehr groß ist. Dieser Nachteil ist besonders gravierend für die kalte Seite einer nach dem Gifford-McMahon-Prinzip arbeitenden Kältemaschine.

Aus der DE-A-3 313 506 ist eine Tieftemperatur-Kältemaschine bekannt, bei der eingefangenes Gas als Stoßdämpfer wirken soll. Diess Lösung setzt einen komplizierten Aufbau voraus. Außerdem gibt es auch bei dieser Lösung Totraumprobleme.

Der Erfindung liegt die Aufgabe zugrunde, eine Kältemaschine der eingangs genannten Art zu schaffen, bei der der Verdränger auf seiner kalten Seite miteiner Dämpfung ausgerüstet ist, die einfach gestaltet ist und Totraumprobleme vermeidet.

Erfindungsgemäß wird diese Aufgabe dadurch gelöst, daß dem Verdränger im Bereich seines kalten Endes ein Paßstück zugeordnet ist, welches in axialer Richtung verschiebbar am Verdränger geführt ist und an seinem freien Ende etwa den äußeren Durchmesser des Verdrängers besitzt, daß das Paßstück und der Verdränger eine Umfangsnut begrenzen, deren Abmessung in Axialrichtung durch Axialverschieben des Paßstückes gegenüber dem Verdränger veränderbar ist, und daß die Feder, die zur Vermeidung eines zu großen Totraumes eine im zusammengedrückten Zustand möglichst kleine Abmessung in Axialrichtung hat, in dieser Nut untergebracht ist.

Bei einer in dieser Weise ausgebildeten Kältemaschine ist das Ziel - Dämpfung bei möglichst kleinem Totraum - in besonders einfacher Weise erreicht. Da zum einen das Paßstück zylindrisch gestaltet ist sowie etwa den äußeren Durchmesser des Verdrängers hat und zum anderen eine in bezug auf ihre Bauhöhe - zumindest im zusammengedrückten Zustand - flache Feder Verwendung findet, ist der Totraum minimal.

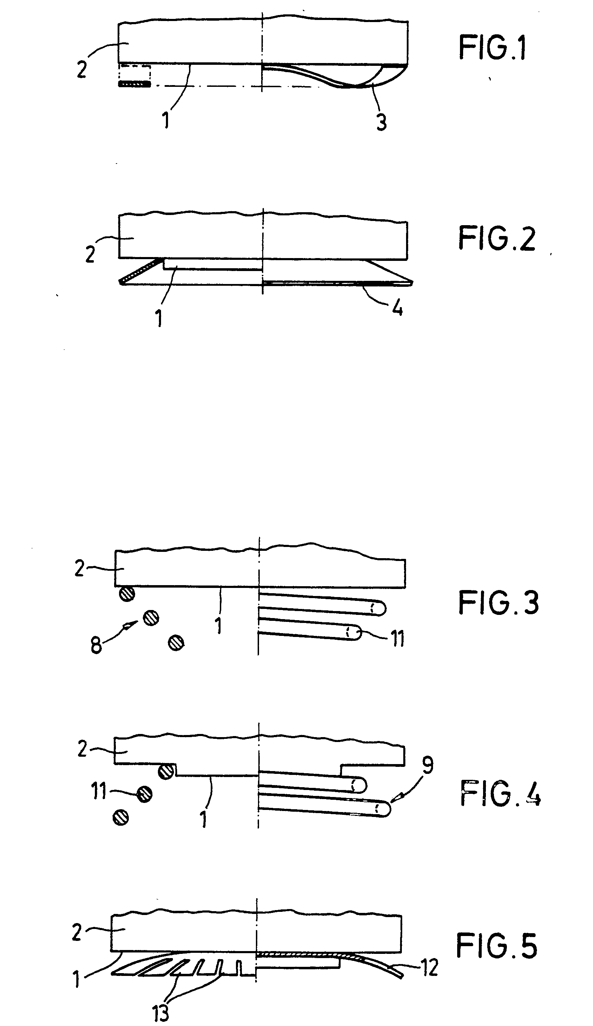

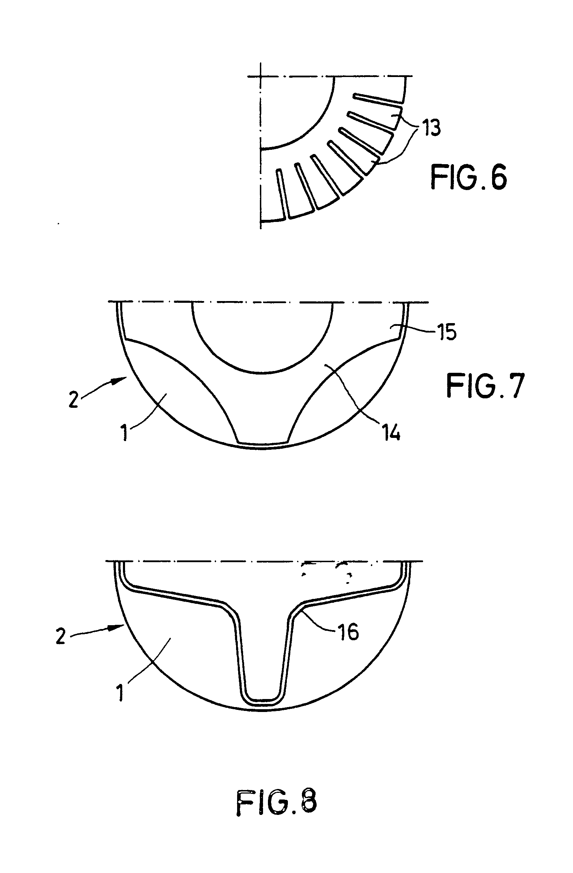

Weitere Vorteile und Einzelheiten der Erfindung sollen anhand von in den Figuren 1 bis 10 dargestellten Ausführungsbeispielen erläutert werden, wobei die Figuren 1 bis 9 lediglich Bauformen der verwendeten Federn zeigen, ohne daß die zugehörige Nut und das Paßstück dargestellt sind.

Die Figuren zeigen verschiedene Varianten der erfindungsgemäßen Dämpfung, teilweise im Schnitt und teilweise in seitlicher Ansicht oder Draufsicht auf die Stirnseite des Verdrängers.

Bei den Ausführungsbeispielen nach den Figuren 1 und 2 sind der Stirnseite 1 des Verdrängers 2 eine Wellfeder 3 beziehungsweise eine Tellerfeder 4 zugeordnet.

Die Figuren 3 und 4 zeigen konische Federn 8 und 9. Diese müssen zur Verhinderung eines zu großen Totraumes so gestaltet sein, daß ihre Höhe im zusammengedrückten Zustand der Stärke der verwendeten Federdrähte 11 entspricht.

Die Figuren 5 und 6 zeigen die Verwendung einer radialen Feder 12, die nach Art einer Tellerfeder gestaltet ist. Ihr äußerer Rand weist radiale Schlitze auf, so daß radialgerichtete Zungen 13 vorhanden sind.

Die Figuren 7 und 8 zeigen Halb-Ansichten der Stirnseite 1 des Verdrängers 2. Die beim Ausführungsbeispiel nach Figur 7 verwendete Flachfeder 14 weist vier die Dämpfung bewirkende, federnde Abschnitte 15 auf. Figur 8 zeigt eine in ihrer Form der Feder 14 entsprechende Flachfeder 18, die aus Federdraht hergestellt ist.

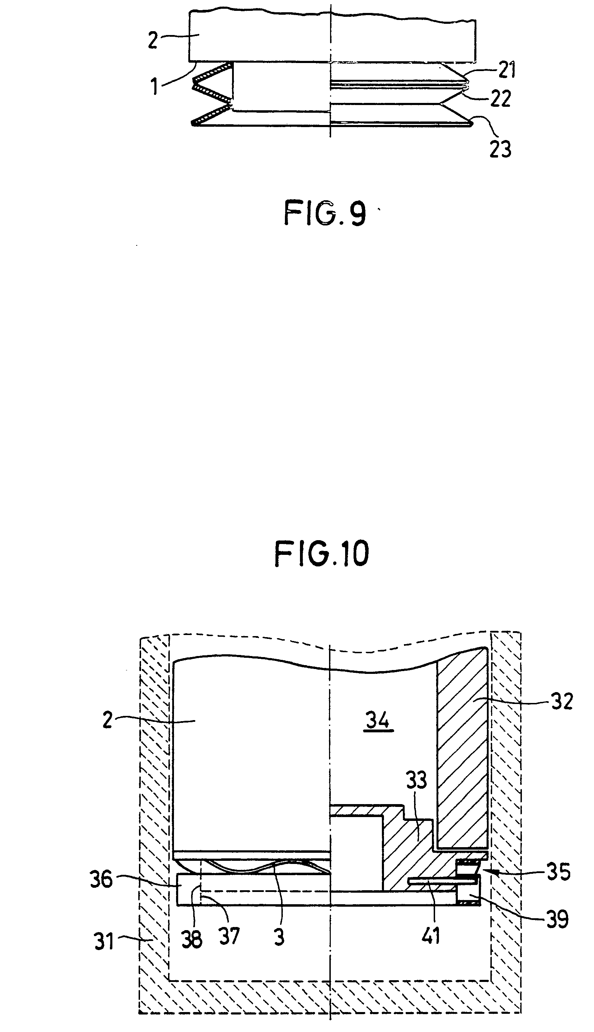

Das Ausführungsbeispiel nach Figur 9 zeigt eine Lösung, bei der drei verschiedene Tellerfedern 21, 22, 23 balgartig zusammengefügt sind. Der nachteilige Totraum ist dann am geringsten, wenn der Außenrand dieser Tellerfedern etwa dem äußeren Durchmesser des Verdrängers 2 entspricht.

In Fig. 10 ist neben dem Verdränger 2 noch gestrichelt der Zylinder 31 dargestellt. Aus der rechten Seite dieser Figur geht der Aufbau des Verdrängers 2 genauer hervor. Er besteht aus der zylindrischen Wandung 32, die auf ihrer (kalten) Stirnseite mit dem Bauteil 33 verschlossen ist. Dadurch wird ein Innenraum 34 gebildet, der mit nicht dargestelltem Regeneratormaterial gefüllt ist. Zur Dämpfung der Bewegung dieses Verdrängers ist eine Wellfeder 3 nach Fig. 1 vorgesehen. Diese befindet sich in einer in ihrer Höhe veränderlichen Nut 35 zwischen dem Verdränger 2 und einem dazu axial verschiebbaren Paßstück 36. Das Paßstück 36 ist als Ring ausgebildet, dessen Außendurchmesser etwa dem Außendurchmesser des Verdrängers 2 entspricht. Die Innenseite 37 des Paßstückes 36 ist auf einem zylindrischen Abschnitt 38 des Bauteils 33 axial verschieblich geführt. Das Paßstück 36 weist Längsschlitze 39 auf, in denen mit dem Bauteil 33 verbundene Stifte 41 enden und damit die axial verschiebbare Halterung am Verdränger 2 ermöglichen.

## Patentansprüche

1. Kältemaschine mit mindestens einer Zylinder-Verdränger-Anordnung (31, 2) und einer von einer Feder (3) bewirkten Dämpfung des Verdrängers auf seiner kalten Seite, dadurch gekennzeichnet, daß dem Verdränger im Bereich seines kalten Endes ein Paßstück (36) zugeordnet ist, welches in axialer Richtung verschiebbar am Verdränger (2) geführt ist und an seinem freien Ende etwa den äußeren Durchmesser des Verdrängers (2) besitzt, daß das Paßstück und der Verdränger eine Umfangsnut (35) begrenzen, deren Abmessung in Axialrichtung durch Axialverschieben des Paßstückes gegenüber dem Verdränger veränderbar ist, und daß die Feder (3), die zur Vermeidung eines zu großen Totraumes eine im zusammengedrückten Zustand möglichst kleine Abmessung in Axialrichtung hat, in dieser Nut (35) untergebracht ist.

2. Kältemaschine nach Anspruch 1, dadurch gekennzeichnet, daß das Paßstück (36) ein stirnseitig am Verdränger (2) geführter Ring ist.

3. Kältemaschine nach Anspruch 2, dadurch gekennzeichnet, daß der Ring mit seiner Innenseite (37) auf einem zylindrischen Abschnitt (38) eines stirnseitigen Bauteils (33) am Verdränger (2) axial verschiebbar geführt ist.

4. Kältemaschine nach Anspruch 3, dadurch gekennzeichnet, daß das Bauteil (33) mit radial gerichteten Stiften (41) ausgerüstet ist, die in axial gerichteten Längsschlitzen (39) im ringförmigen Paßstück (36) enden und der axial verschiebbaren Halterung am Verdränger (2) dienen.

5. Kältemaschine nach einem der Ansprüche 1 bis 4, dadurch gekennzeichnet, daß die Feder (3) als in axialer Richtung gewellte Wellfeder ausgebildet ist.

## Claims

1. A refrigerating machine with at least one cylinder/displacer arrangement (31, 2) and comprising shock-absorption, effected by a spring (3), on the cold side of the displacer, characterized in that a mating piece (36) is associated with the di splacer in the area of its cold end, which mating piece (36) is positioned on the displacer (2) so as to be displaceable in the axial direction and of which the free end has approximately the outer diameter of the displacer (2), in that the mating piece and the displacer define a circumferential groove (35), whose dimensions may be altered in the axial direction by axial displacement of the mating piece with respect to the displacer, and in that the spring (3), which has the smallest possible dimensions in the axial direction when in the compressed state to avoid too large a dead space, is accommodated in this groove (35).

2. A refrigerating machine according to claim 1, characterized in that the mating piece (36) is a ring positioned at the front of the displacer (2).

3. A refrigerating machine according to claim 2, characterized in that the ring is positioned axially displaceably with its inside (37) on a cylindrical section (38) of a component (33) located at the front of the displacer (2).

4. A refrigerating machine according to claim 3, characterized in that the component (33) is provided with radially directed pins (41), which end in axially directed longitudinal slits (39) in the annularmating piece (36) and aid axially displaceable mounting on the displacer (2).

5. A refrigerating machine according to any one of claims 1 to 4, characterized in that the spring (3) is constructed as a corrugated spring corrugated in the axial direction.

## Revendications

1. Machine frigorifique avec au moins un ensemble cylindre- refouleur (31, 2) et un amortissement de la face froide du refouleur par un ressort (3), ladite machine étant caractérisée en ce qu'une pièce ajustée (36) est affectée à l'extrémité froide du refouleur (2), coulisse axialement sur ce dernier et présente sensiblement à son extrémité libre le diamètre extérieur du refouleur (2); la pièce ajustée et le refouleur délimitent une gorge circonférentielle (35) dont la dimension axiale est variable par translation axiale de la pièce ajustée par rapport au refouleur; et le ressort (3), qui présence une dimension axiale dans l'état comprimé aussi faible que possible afin d'éviter un trop grand espace résiduel, est logé dans ladite gorge (35).

2. Machine frigorifique selon revendication 1, caractérisée en ce que la pièce ajustée (36) est un anneau guidé sur la face frontale du refouleur (2).

3. Machine frigorifique selon revendication 2, caractérisée en ce que la face intérieure (37) de l'anneau est guidée en translation axiale sur un tronçon cylindrique (38) d'une pièce (33) sur la face frontale du refouleur (2).

4. Machine frigorifique selon revendication 3, caractérisée en ce que la pièce (33) est équipée de chevilles (41) radiales, qui se terminent dans des fentes longitudinales (39) axiales de la pièce ajustée annulaire (36) et assurent la fixation avec translation axiale sur le refouleur (2).

5. Machine frigorifique selon une quelconque des revendications 1 à 4, caractérisée en ce que le ressort (3) est réalisé sous forme d'une rondelle ondulée axialement.

0 160 808

FIG.1

FIG.2

FIG.3

FIG.4

FIG.5

FIG.6

FIG.7

FIG.8

FIG.9

FIG.10